# EUROPEAN PATENT APPLICATION

(11) **EP 3 050 652 A1**
(43) Date of publication of application: **03.08.2016**
(21) Application number: 16151882.4
(22) Date of filing: 19.01.2016
(51) Int. Cl.: B23B 1/00, B23B 27/00, B23B 27/04, B23B 27/08

(54) **METHOD TO MACHINE DEEP FEATURES USING A LATHE**

(30) Priority: 20.01.2015 US 201514600827
(71) Applicant: United Technologies Corporation, Hartford, CT 06101 (US)
(72) Inventor: FROMERTH, Eric, Manchester, CT Connecticut 06042 (US); CZYWCZYNSKI, Michael A., Plantsville, CT Connecticut 06479 (US)
(74) Representative: Bridge, Kerry Ann

(57) **Abstract**

A method of machining includes mounting a part (12) to a rotatable chuck (14) of a lathe (10). A tool (18) is then installed into the lathe (10). The tool (18) is swung along an arcuate pathway to pass the tool (18) through a smaller diameter area of the part to a larger diameter area of the part (12), in order to insert the tool (18) into a cavity (20) of the part (12). The part (12) is then rotated and material is machined from the part. Also disclosed is a lathe (10) incorporating a tool (18), which is held in such a way that it is rotatable.

## Description

### BACKGROUND

The present invention relates generally to machining, and, more particularly, to a method of deep feature machining on a lathe.

Arc welding, inertia bond welding, electron beam welding, and friction welding are additive processes that are used in the manufacturing of many different types of goods, including gas turbine engines. These processes join individual pieces to form complex components that would be difficult (or impossible) to make using other processes. Unfortunately, the joining of material during the welding process can leave behind an uneven surface at the joint after cooling. If not addressed, the joint will include stress risers that eventually lead to the failure of the component during use.

Therefore, a weld joint is often smoothed over with a subtractive process, such as grinding or machining. If the joint is positioned along a hollow section of the component, it is best to finish both the outside and the inside of the weld. But the final component can have a complex shape, and it can be difficult to reach the inside of the joint in order to finish it.

### SUMMARY

A method of machining includes mounting a part to a rotatable chuck of a lathe. A tool is then installed into the lathe. The tool is swung along an arcuate pathway to pass the tool through a smaller diameter area of the part to a larger diameter area of the part. The part is inserted into a cavity of the part. The part is then rotated and material is machine from the part.

In an alternative embodiment of the present disclosure, a method of machining includes mounting a part to a rotatable chuck of a lathe. A tool is then installed into the lathe. The tool is rotated about an axis of rotation of a pivot, with the axis being substantially perpendicular to a centerline axis of the part. The part is then rotated and material is machine from the part.

In an alternative embodiment of the present disclosure, a lathe includes a rotatable chuck for supporting a part. The lathe also includes a tool and a tool holder. The tool holder is rotatable about a first, second, and third axis. The first axis is configured to allow axial displacement of the tool in a direction co-linear with a centerline axis of the part. The second axis is configured to allow radial displacement of the tool in a direction perpendicular to the centerline axis of the part. The third axis is configured to allow rotation of the tool about a pivot with an axis of rotation substantially perpendicular to a centerline axis of the part.

### BRIEF DESCRIPTION OF THE DRAWINGS

FIG. 1 is a side cross-sectional view of a lathe and a part.
FIG. 2 is a side cross-sectional view of a tool and of a part.

### DETAILED DESCRIPTION

Using a lathe to machine deep internal cavities can be difficult to machine due to width of the area that needs to be machined compared to the travel the tool has. Lathes typically include two axes of travel for the part being machined which further limits how a tool can enter the part. The present disclosure includes a lathe with an increased number of positioning or rotational axes to manipulate a tool in motions current lathes are not able to support.

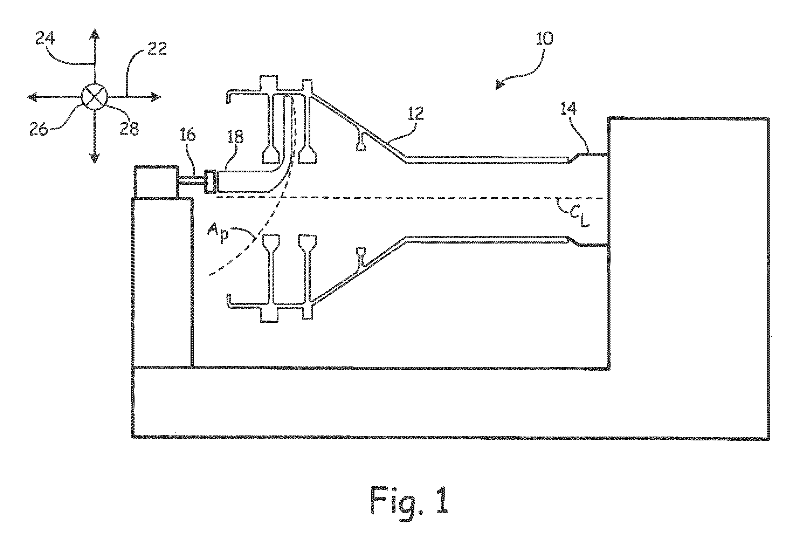

FIG. 1 side cross-sectional view of lathe 10 and part 12. Lathe 10 includes rotatable chuck 14 for holding part 12 and tailstock 16 for holding tool 18. Rotatable chuck is connected to lathe 10 such that rotatable chuck 14 rotates relative to lathe 10 at a variable speed controlled by a user. Rotatable chuck 14 is configured to allow part 12 to be mounted to rotatable chuck 14. Cavity 20 is located inside of part 12 and creates an empty space devoid of material along a portion of part 12. Tool 18 is connected to tailstock 16 and is positionable thereby such that tool 18 can be inserted into and extracted from cavity 20 of part 12. After part 12 is attached to rotatable chuck 14 and tool 18 is installed to tailstock 16, lathe 10 can be used to selectively machine material away from part 12. Tool 18 includes a rigid material and may include a curved portion.

A machining method to remove material from part 12 includes mounting part 12 into rotating chuck 14 of lathe 10. Tool 18 is then installed into lathe 10. Tool 18 is then inserted into cavity 20 of part 12. Once tool 18 is set in place, part 12 is rotated and material is removed from part 12.

Inserting tool 18 is performed by moving tool 18 along first axis 22 and second axis 24. First axis 22 extends in a direction collinear with centerline axis C_{L} of part 12. Second axis 24 extends in a direction perpendicular to centerline axis C_{L} of part 12. Traditional lathes include only these two axes of movement when maneuvering a tool into a work-piece. Due to the size of a bore diameter of the work-piece used in a traditional lathe, the radial length of a tool is limited by the size of the bore diameter of the work-piece. A surface of the part to be machined that is located at a radial distance greater than a bore diameter of the part cannot be reached because a tool that is long enough in the radial direction to reach the machining will not fit through the bore diameter of the part.

In an embodiment of the present disclosure, tool 18 can be moved by rotating tool 18 about third axis 26 (shown pointing into the page in FIG. 1). Third axis 26 is configured to allow rotation of tool 18 about pivot 28, wherein rotation about third axis 26 is substantially perpendicular to centerline axis C_{L} of part 12. Tool 18 is inserted into part 12 by swinging tool 18 along arcuate pathway Aₚ.

Adding an additional axis for maneuvering the tool in the lathe allows for the use of conventional design deep reach tooling without the need for flexible tooling currently required to reach surfaces located at distances greater than a bore diameter of the part being machined. Flexible tooling can also be cumbersome and expensive to use. Rigid tooling allows for increased consistency in machining results and allows for a more predictable final work product for the machined part.

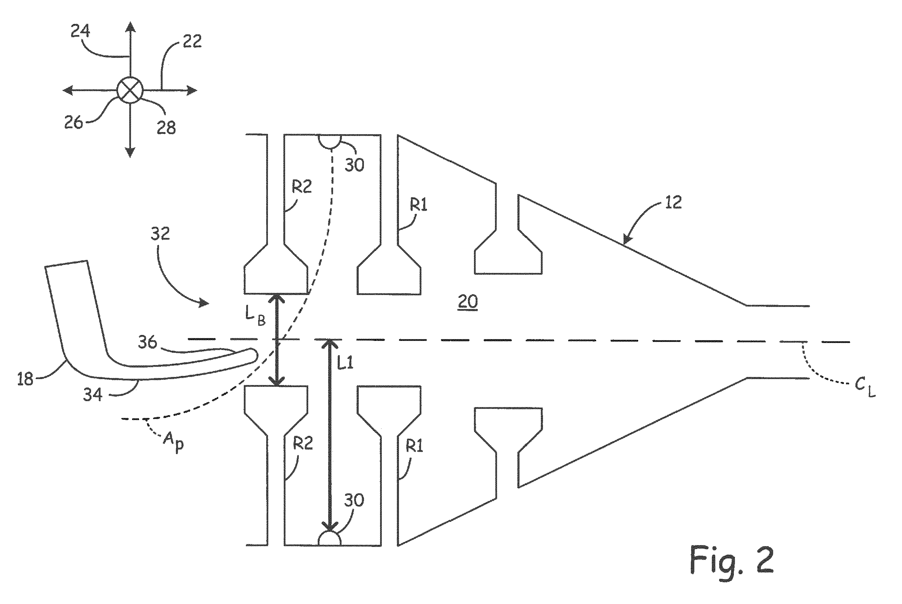

FIG. 2 is a side cross-sectional view of tool 18 and of part 12 with the same perspective as the view in FIG. 1. Part 12 extends along centerline axis C_{L} and is made of two individual rotors that have been combined by an additive process such as arc welding, inertia bond welding, electron beam welding, or friction welding. In the illustrated embodiment rotor R1 has been affixed to rotor R2 at weld 30. Rotors R1 and R2 each include a disc that extends radially inwardly toward centerline axis C_{L}, although weld 30 is at a distance L1 from centerline axis C_{L}. Distance L1 is larger than bore 32 at the end of part 12, which has bore diameter L_{B}. Bore diameter L_{B} can be defined by the opening located at an inner diameter of rotor R2.

Due to the relatively small size of bore diameter L_{B} at the end of part 12 and the relatively larger distance of L1, arcuate pathway Aₚ is designed such that tool 18 can be swung through part 12 along arcuate pathway Aₚ without coming into contact with other elements of part 12. The shape of tool 18 includes curved portion 34. Tool 18 includes a radial length that extends from distal end 36 to a second end opposite distal end 36.

In addition to the axial and radial displacement provided by first axis 22 and second axis 24 respectively, third axis 26 allows tailstock 16 and to rotate about pivot 28 to swing tool 18 along arcuate pathway Aₚ radially outward to reach weld 30. As tool 18 is swung along arcuate pathway Aₚ, distal end 36 of tool 18 inserts into cavity 20 of part 12. Swinging tool 18 along arcuate pathway Aₚ allows distal end 36 of tool 18 to reach weld 30 located along an inner surface of part 18. Distal end 36 may include an abrasive tip. Weld 30 is located at radial distance L1 from centerline axis C_{L} of part 12. Radial distance L1 is greater than bore diameter L_{B}. Weld 30 may include a weld flash area resulting from various types of welding processes.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

### Discussion of Possible Embodiments

The following are non-exclusive descriptions of possible embodiments of the present invention.

A method of machining a part with a lathe having a tool may include mounting the part to the lathe. The tool may be inserted into a cavity of the part, wherein inserting the tool may include swinging the tool along an arcuate pathway to pass the tool through a smaller diameter area of the part to a larger diameter area of the part. The part may be rotated and material may be removed from the part.

The method of machining of the preceding paragraph can optionally include, additionally and/or alternatively, any one or more of the following features, configurations and/or additional components:

a further embodiment of the foregoing method of machining, wherein the arcuate pathway may be designed such that the tool can be swung through the part without coming into contact with other elements of the part;

a further embodiment of the foregoing method of machining, wherein the tool may include an abrasive tip disposed on a distal end of the tool;

a further embodiment of the foregoing method of machining, wherein the distal end of the tool may be capable of reaching an inner surface of the part, the inner surface located at a distance from a centerline axis of the part that is greater than a bore diameter of the part;

a further embodiment of the foregoing method of machining, wherein a portion of the tool may be curved;

a further embodiment of the foregoing method of machining, wherein the tool may be substantially rigid;

a further embodiment of the foregoing method of machining, wherein before mounting the part to the rotatable chuck of the lathe, a plurality of pieces may be welded to form the part, wherein the welding may produce a weld flash area; and

a further embodiment of the foregoing method of machining, wherein the material removed from the part may be located at the weld flash area.

A method of machining a part with a lathe having a tool may include mounting the part to the lathe. The tool may be rotated about a pivot, wherein an axis of rotation of the pivot may be substantially perpendicular to a centerline axis of the part. The part may be rotated and material may be removed from the part.

The method of machining of the preceding paragraph can optionally include, additionally and/or alternatively, any one or more of the following features, configurations and/or additional components:

a further embodiment of the foregoing method of machining, wherein an arcuate pathway of the tool may be designed such that the tool can be swung through the part along the arcuate pathway without coming into contact with other elements of the part;

a further embodiment of the foregoing method of machining, wherein the tool may include an abrasive tip disposed on a distal end of the tool;

a further embodiment of the foregoing method of machining, wherein the distal end of the tool may be capable of reaching an inner surface of the part, the inner surface located at a distance from a centerline axis of the part that is greater than a bore diameter of the part;

a further embodiment of the foregoing method of machining, wherein a portion of the tool may be curved;

a further embodiment of the foregoing method of machining, wherein the tool may be substantially rigid;

a further embodiment of the foregoing method of machining, wherein before mounting the part to the rotatable chuck of the lathe, a plurality of pieces may be welded to form the part, wherein the welding may produce a weld flash area; and

a further embodiment of the foregoing method of machining, wherein the material removed from the part may be located at the weld flash area.

A lathe may include a rotatable chuck for supporting a part. The lathe may include a tool and a tool holder. The tool holder may be rotatable about a first axis, a second axis, and a third axis. The first axis may be configured to allow axial displacement of the tool in a direction co-linear with a centerline axis of the part. The second axis may be configured to allow radial displacement of the tool in a direction perpendicular to the centerline axis of the part. The third axis may be configured to allow rotation of the tool about a pivot, wherein an axis of rotation of the pivot may be substantially perpendicular to a centerline axis of the part.

The lathe of the preceding paragraph can optionally include, additionally and/or alternatively, any one or more of the following features, configurations and/or additional components:

a further embodiment of the foregoing lathe, wherein the tool may include a radial length that is greater than a bore diameter of the part; and

a further embodiment of the foregoing lathe, wherein the tool may be positioned to touch an inner surface of the part, the inner surface located at a distance from a centerline axis of the part that may be greater than a bore diameter of the part.

## Claims

1. A method of machining a part with a lathe (10) having a tool, the method comprising:
mounting the part (12) to the lathe (10);
inserting the tool (18) into a cavity (20) of the part (12), wherein inserting the tool (18) includes swinging the tool (18) along an arcuate pathway to pass the tool through a smaller diameter area of the part to a larger diameter area of the part;
rotating the part (12; and
removing material from the part.

2. A method of machining a part (12) with a lathe (10) having a tool, the method comprising:
mounting the part (12) to the lathe (10);
rotating the tool (18) about a pivot, wherein an axis of rotation of the pivot is substantially perpendicular to a centerline axis of the part;
rotating the part (12); and
removing material from the part (12.

3. The method of claim 1 further comprising designing the arcuate pathway such that the tool (18) can be swung through the part (12) without coming into contact with other elements of the part.

4. The method of any preceding claim, wherein the tool (18) includes an abrasive tip disposed on a distal end of the tool.

5. The method of claim 4, wherein the distal end of the tool (18) is capable of reaching an inner surface of the part (12), the inner surface located at a distance from a centerline axis of the part that is greater than a bore diameter of the part.

6. The method of any preceding claim, wherein a portion of the tool (18) is curved.

7. The method of any preceding claim, wherein the tool (18) is substantially rigid.

8. The method of any preceding claim, and further comprising, before mounting the part (12) to the rotatable chuck (14) of the lathe (10):
welding a plurality of pieces to form the part (12), wherein the welding produces a weld flash area.

9. The method of claim 8, wherein the material removed from the part (12) is located at the weld flash area.

10. The method of any preceding claim further comprising designing an arcuate pathway of the tool (18) such that the tool can be swung through the part along the arcuate pathway without coming into contact with other elements of the part (12).

11. A lathe (10) comprising:
a rotatable chuck (14) for supporting a part (12);
a tool (18); and
a tool holder rotatable about a first axis (22), a second axis (24), and a third axis (26), wherein:
the first axis (22) is configured to allow axial displacement of the tool in a direction co-linear with a centerline axis of the part,
the second axis (24) is configured to allow radial displacement of the tool in a direction perpendicular to the centerline axis of the part, and
the third axis (26) is configured to allow rotation of the tool about a pivot, wherein an axis of rotation of the pivot is substantially perpendicular to the centerline axis of the part (12).

12. The lathe of claim 11, wherein the tool (18) includes a radial length that is greater than a bore diameter of the part (12).

13. The lathe of claim 11, wherein the tool (18) is positioned to touch an inner surface of the part (12), the inner surface located at a distance from the centerline axis of the part that is greater than a bore diameter of the part (12).
